# EUROPEAN PATENT SPECIFICATION

(11) **EP 2 130 690 B1**
(45) Date of publication and mention of the grant of the patent: **14.05.2014**
(21) Application number: 09161579.9
(22) Date of filing: 29.05.2009
(51) Int. Cl.: B60C 9/14

(54) **Tire with a sidewall rubber insert**
Reifen mit einem Seitenwandeinsatz aus Gummi
Pneu ayant un insert en caoutchouc dans les flancs

(30) Priority: 02.06.2008 US 57896 P
(43) Date of publication of application: 09.12.2009
(73) Proprietor: The Goodyear Tire & Rubber Company, Akron, OH 44316-0001 (US)
(72) Inventor: Vorreiter, Walter, D-63579, Freigericht (DE)
(74) Representative: Kutsch, Bernd

(56) References cited:
- EP-A1- 0 515 226
- EP-A1- 0 922 593
- EP-A1- 1 155 878
- EP-A2- 0 943 466
- JP-A- 63 141 809
- US-A- 4 779 658

## Description

### Technical Field

This invention relates to pneumatic tires, and particularly to high performance passenger tires that are not runflat tires.

### Background of the Invention

For modern high performance passenger tires, it is highly desired to have superior handling, especially cornering stability.

It is known in the runflat tire art (see for instance EP 1 388 436 A1) to utilize sidewall designs that are thicker and/or stiffer, so that the tire's load can be carried by an uninflated tire without otherwise compromising vehicle handling until such reasonable time as the tire can be repaired or replaced. The methods used in sidewall stiffening include the incorporation of inserts or fillers generally having, in cross-sectional view, a crescent shape. Such inserts or fillers are located in the inner peripheral surface of the sidewall portion of the carcass, which is the region in the tire usually having the lowest rigidity. In such runflat tire designs, the entire sidewall has a crescent shaped cross-section so as to provide rigidity. The sidewalls of such tires, when operated in the uninflated condition, experience a net compressive load, though with outer portions of the sidewalls necessarily being in tension due to the bending deformation, especially in the regions of the sidewall adjacent to the ground-contacting portion of the tread. Due to the large amounts of rubber required to stiffen the sidewall members, heat buildup is a major factor in tire failure especially when the uninflated tire is operated for prolonged periods at high speeds. These inserts are typically located between the carcass plies.

A runflat tire is a pneumatic vehicle tire that is designed to resist the effects of deflation and to enable the vehicle to continue to be driven, although depending on the type of tire, at a reduced maximum speed of typically about 80 km/h and for a limited distance of typically about 80 km. Accordingly, a run-flat tire is a tire whose manufacturer's specification and design allows it to operate such a tire when mounted on a vehicle under uninflated conditions in emergency situations such as loss of inflation pressure. A non-runflat tire on the other hand is a tire whose manufacturer's specification does not allow it to operate such a tire when mounted on a vehicle under uninflated conditions. i.e. with no or significantly reduced inflation pressure.

EP-A- 0 922 593 describes a pneumatic safety tire having the features of the preamble of claim 1. Similar safety tires or runflat tires are described in US-A- 4,779,658, EP-A- 0 5-15 226, EP-A- 1 155 878, EP-A- 0 943 466 and JP-A- 63141809.

### Summary of the invention

The invention relates to a tire according to claim 1.

Dependent claims refer to preferred embodiments of the invention.

In a preferred aspect of the invention, the tire is a non-runflat tire.

In a preferred aspect of the invention, the tire is a non-runflat high performance passenger tire.

In a further preferred aspect of the invention, the tire comprises only one single crescent-shaped rubber insert.

In yet a further preferred aspect of the invention, the tire comprises two carcass plies that both extend from one bead of the tire to the other bead of the tire and that are both wrapped around a respective bead core from the axially inner side to the axially outer side of said bead core. In this case, the end of the axially inner carcass ply turn-up is located at a radial height of 10 to 30 mm, alternatively 15 to 25 mm, as measured radially upwards from a line parallel to the radially lower side of the bead core. The end of the axially outer carcass ply turn-up is located at a radial height of 35 to 65 mm, alternatively 45 to 55 mm, as measured radially upwards from a line parallel to the radially lower side of the bead core in this case.

In yet a further preferred aspect of the invention, the radially upper tip of the bead apex is located at a radial height of 20 to 35 mm, alternatively 25 to 30 mm, as measured radially upwards from a line parallel to the radially lower side of the bead core.

The hardness (Shore A, 100°C) of the preferably only one crescent shaped insert is preferably in a range of from 76 to 78.

The at least one crescent-shaped rubber insert preferably extends from a radial height of 20 to 35 mm, alternatively 25 to 30 mm, as measured radially upwards from a line parallel to the radially lower side of the bead core, through the sidewall up to under the tread of the tire.

Preferably, the at least one crescent-shaped rubber insert extends axially inwardly under the tread over a lateral distance of 15 to 30 mm as measured from a respective lateral outer tread edge parallel to the axial direction of the tire.

The rubber compound of the at least one crescent-shaped rubber insert preferably has a tan delta in the range of from 0.044 to 0.047, and/or has a 100% modulus G in a range of from 7.5 to 7.8 MPa.

### Brief Description of the Drawings

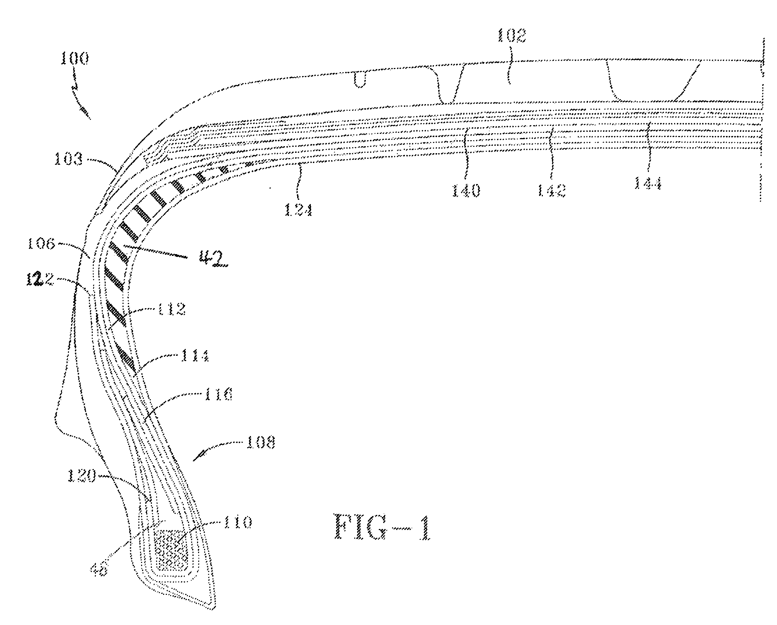

The structure, operation, and advantages of the presently preferred embodiment of the invention will become further apparent upon consideration of the following description taken in conjunction with the accompanying drawings, wherein FIGURE 1 is a cross-sectional view of a tire of the present invention.

### Definitions

"Axial" and "axially" means the lines or directions that are parallel to the axis of rotation of the tire.
"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.
"Carcass" means the tire structure apart from the belt structure, tread, undertread over the plies, but including the beads.
"Circumferential" means lines or directions extending along the perimeter of the surface of the annular tread perpendicular to the axial direction.
"Innerliner" means the layer or layers of elastomer or other material that form the inside surface of a tubeless tire and that contain the inflating gas within the tire.
"Lateral" means a direction parallel to the axial direction.
"Normal Inflation Pressure" means the specific design inflation pressure and load assigned by the appropriate standards organization for the service condition for the tire.
"Ply" means a layer of rubber-coated parallel cords.
"Radial" and "radially" mean directions radially toward or away from the axis of rotation of the tire.
"Shoulder" means the upper portion of sidewall just below the tread edge.
"Sidewall" means that portion of a tire between the tread and the bead.

### Detailed Description of the Preferred Embodiments

With reference to FIGURE 1, a cross section of a pneumatic radial tire 100 for use in passenger vehicles is illustrated. The tire 100 is a passenger tire, preferably a high performance tire. The tire may or not be a run-flat tire. Preferably, it is a non-runflat tire. The tire 100 has a ground-engaging tread portion 102 which terminates in the shoulder portions 103 at the lateral edges of the tread portion. The tire further includes sidewall portions 106 which extend from the lateral edges of the tread portion and terminate in the respective bead regions 108, each having an annular inextensible bead core 110. The tire 100 is further provided with a carcass reinforcing structure 112 which extends across the entire tire structure from bead region through one sidewall portion 106, tread portion, opposite sidewall portion to bead region. The carcass reinforcing structure is preferably radial and comprises one or more plies, preferably two plies 114 and 116. The turnup ends 120, 122 of at least one ply 114 or 116 of radial ply structure are preferably wrapped about bead cores 110 on each side of the tire. Preferably, the plys 114, 116 are nonmetallic.

Preferably, at least one turnup end 120, and most preferably both turnup ends 120, 122 are wrapped about the bead cores. The tire 10 may include a conventional innerliner 124 forming the inner peripheral surface of the tire 100 if the tire is to be of the tubeless type.

Placed circumferentially about the radially outer surface of carcass reinforcing structure and beneath the tread portion is a tread reinforcing belt structure 140. In the particular embodiment illustrated, belt structure 140 comprises two cut belt plies 142, 144. The cords of belt plies 142, 144 are oriented at an angle of 15 degrees to 35 degrees and preferably 20 degrees to 28 degrees with respect to the mid-circumferential centerline of the tire. However, the belt structure 140 may comprise any number of belt plies of any desired configuration and of an orientation within a range of 0 degrees to 90 degrees. The belt structure 140 may be so designed to provide lateral stiffness across the belt width so as to minimize lifting of the tread 102 from the road surface during operation of the tire in the uninflated condition. In the embodiments illustrated, the lateral stiffness may be accomplished by making the cords of belt plies of fiberglass, aramid and/or metal and preferably of steel and more preferably of a steel cable construction.

The first and second reinforcing ply structures each comprise a single ply layer. It is, however, within the terms of the present invention to include any number of additional reinforcing ply structures in such locations as to be axially outward of steel reinforced ply structure.

The tire further preferably includes only a single insert 42 located axially inward of the one or more plies, between the innerliner and the plies, and accordingly in the flexed area of each sidewall. Each insert 42 extends from each bead region 108, which includes the beads 110 and the apex 48, radially to beneath the reinforcing belt structures 140 in each sidewall. Preferably, the end of the insert 42 radially overlaps with the radially outer end of the apex 48. The insert 42 is located between the innerliner and the carcass plies 114, 116.

The single insert in each sidewall is preferably made of elastomeric material. The elastomeric material of insert can be selected from a wide range of elastomers having a shore A hardnesses from a relative soft shore hardness A of 68 to very hard 90. Preferably, the shore A hardness (100°C) ranges from 70 to 85, more preferably from 75 to 80, and most preferably from 76 to 78. The insert shape, which is illustrated as having a crescent shaped cross-sectional profile, can be modified to insure good ride performance and an acceptable sidewall spring rate. The elastomeric compound preferably has a tangent delta in the range of from 0.02 to 0.06, preferably in a range of from 0.035 to 0.055, and most preferably in a range of from 0.044 to 0.047, and/or has a 100% modulus G in a range of from 2 MPa and 10 MPa, preferably in a range of from 6 to 8 MPa, and most preferably in a range of from 7.5 to 7.8 MPa (as measured at Metravib at 90°C, 0.2%).

A further aspect in selecting the elastomeric material for the insert 42 is its hysteresis. The hysteresis of the elastomeric material is a measure of its tendency to generate internal heat under flexing service conditions. Hysteresis is a term for heat energy expended in a material (e.g., cured rubber composition) by applied work, and low hysteresis of a rubber composition is indicated by a relatively high rebound, relatively low internal friction and relatively low loss modulus property values. Relatively speaking, a rubber or elastomeric material having a lower hysteresis generates less internal heat under service conditions than an otherwise comparable elastomeric or rubber with a substantially higher hysteresis. Thus, in a preferred embodiment of the invention a relatively low hysteresis is desired for the rubber composition for the insert 42 and the plycoat(s) of plies 38 and 40.

A further aspect of the design of the insert 42 is its thickness. In the embodiment shown, the maximum thickness of the insert 42 is less than 3 mm, i.e. 1.5, 2.0 or 2.5 mm for instance. Preferably, only a single crescent-shaped insert 42 is used which is the sole insert in the sidewall 106 and which is thin compared to the thickness of the sidewall 106 and whose rubber compound is hard compared to the sidewall rubber compound. Such a thin insert 42 is on the one hand not suitable to provide runflat capabilities of the tire but on the other hand significantly improves the handling of such a tire.

The aforesaid sidewall insert 42 preferably has a high degree of stiffness yet also a relatively low hysteresis. This reduces the heat-generating effects of flexure of insert 42, especially when the tire is operated under underinflated or runflat conditions. The tire's life, especially during runflat operation, is thereby improved over that of prior art runflat tires.

Generally, the stiffness of the rubber composition for insert 42 is desirable for strength and dimensional stability of the tire sidewall. Accordingly, it is preferred that the rubber or elastomeric compositions for inserts 42 and the plycoats of plies have the properties of both relatively high stiffness and low hysteresis.

## Claims

1. A pneumatic tire comprising a carcass having at least one carcass ply (114), optionally an innerliner (124), a sidewall (106), a bead (108) comprising a bead core (110) a bead apex (48), and a tread (102) disposed radially outward of the carcass, wherein the sidewall (106) comprises at least one crescent-shaped rubber insert (42) located between the innerliner (124) and the at least one carcass ply (114, 116), wherein the rubber of the at least one crescent-shaped rubber insert has a Shore A hardness (100°C) in a range of 74 to 80, and wherein the maximum thickness of the at least one crescent-shaped rubber insert (42), as measured parallel to the axis of rotation of the tire, is less than 30% of the thickness of the tire sidewall (106) as measured parallel to the axis of rotation of the tire from the axially inner surface of the sidewall (106) to the axially outer surface of the sidewall (106) at the location of the maximum thickness of the at least one crescent-shaped rubber insert (42), **characterized in that** the maximum thickness of the at least one crescent-shaped rubber insert(s) is in a range of from 1.5 to 2.5 mm and **in that** the rubber compound of the at least one crescent-shaped rubber insert (42) has a tan delta in the range of from 0.02 to 0.06 and a 100% modulus G in a range of from 2 MPa to 10 MPa.

2. The tire of claim 1 comprising only one single crescent-shaped rubber (42) insert.

3. The tire of claim 1 or 2 comprising two carcass plies (114, 116) that both extend from one bead (108) of the tire (100) to the other bead of the tire and that are both wrapped around a respective bead core (110) from the axially inner side to the axially outer side of said bead core (110), wherein the end of the axially inner carcass ply turn-up (120) is located at a radial height of 10 to 30 mm, alternatively 15 to 25 mm, as measured radially upwards from a line parallel to the radially lower side of the bead core (110), and wherein the end of the axially outer carcass ply turn-up (122) is located at a radial height of 35 to 65, alternatively 45 to 55 mm, as measured radially upwards from a line parallel to the radially lower side of the bead core (110).

4. The tire of any one of the previous claims wherein a radially upper tip of the bead apex (48) is located at a radial height of 20 to 35 mm, alternatively 25 to 30 mm, as measured radially upwards from a line parallel to the radially lower side of the bead core (110).

5. The tire of any one of the previous claims wherein the hardness (Shore A, 100°C) is in a range of from 76 to 78.

6. The tire of any one of the previous claims wherein the at least one crescent-shaped rubber insert (42) extends from a radial height of 20 to 35 mm, alternatively 25 to 30 mm, as measured radially upwards from a line parallel to the radially lower side of the bead core (110), through the sidewall (106) up to under the tread (102) of the tire (100).

7. The tire of any one of the previous claims wherein the at least one crescent-shaped rubber insert (42) extends axially inwardly under the tread over a lateral distance of 15 to 30 mm, as measured from a respective lateral outer tread edge parallel to the axial direction of the tire.

8. The tire of any one of the previous claims wherein the rubber compound of the at least one crescent-shaped rubber insert (42) has a tan delta in the range of from 0.044 to 0.047 and/or a 100% modulus G in a range of from 7.5 to 7.8 MPa.

9. The tire of any one of the previous claims wherein the tire is a high performance passenger tire.

10. The tire of any one of the previous claims wherein the tire is not a runflat tire

## Patentansprüche

1. Luftreifen, umfassend eine Karkasse mit mindestens einer Karkassenlage (114), optional eine Innenisolierung (124), eine Seitenwand (106), einen Wulst (108), der einen Wulstkern (110) umfasst, ein Wulstkernprofil (48), und eine radial auswärts von der Karkasse angeordnete Lauffläche (102), wobei die Seitenwand (106) mindestens einen halbmondförmigen Kautschukeinsatz (42) umfasst, der sich zwischen der Innenisolierung (124) und der mindestens einen Karkassenlage (114, 116) befindet, wobei der Kautschuk des mindestens einen halbmondförmigen Kautschukeinsatzes eine Shore A-Härte (100°C) in einem Bereich von 74 bis 80 aufweist, und wobei die maximale Dicke des mindestens einen halbmondförmigen Kautschukeinsatzes (42), parallel zur Rotationsachse des Reifens gemessen, weniger als 30% der Dicke der Reifenseitenwand (106) beträgt, parallel zur Rotationsachse des Reifens von der axial inneren Fläche der Seitenwand (106) bis zu der axial äußeren Fläche der Seitenwand (106) an der Stelle der maximalen Dicke des mindestens einen halbmondförmigen Kautschukeinsatzes (42) gemessen, **dadurch gekennzeichnet, dass** die maximale Dicke des bzw. der mindestens einen halbmondförmigen Kautschukeinsatzes bzw. -einsätze in einem Bereich von 1,5 bis 2,5 mm liegt und dass die Kautschukmischung des mindestens einen halbmondförmigen Kautschukeinsatzes (42) einen tan delta im Bereich von 0,02 bis 0,06 und einen 100% G-Modul in einem Bereich von 2 MPa bis 10 MPa aufweist.

2. Reifen nach Anspruch 1, nur einen einzigen halbmondförmigen Kautschukeinsatz (42) umfassend.

3. Reifen nach Anspruch 1 oder 2, umfassend zwei Karkassenlagen (114, 116), die sich beide von einem Wulst (108) des Reifens (100) zu dem anderen Wulst des Reifens erstrecken und die beide um einen jeweiligen Wulstkern (110) herumgeschlagen sind, von der axialen Innenseite zu der axialen Außenseite dieses Wulstkerns (110), wobei das Ende des axial inneren Karkassenlagenumschlags (120) sich auf einer radialen Höhe von 10 bis 30 mm, alternativ 15 bis 25 mm, befindet, radial aufwärts von einer Linie parallel zur radial unteren Seite des Wulstkerns (110) gemessen, und wobei das Ende des axial äußeren Karkassenlagenumschlags (122) sich auf einer radialen Höhe von 35 bis 65, alternativ 45 bis 55 mm, befindet, radial aufwärts von einer Linie parallel zur radial unteren Seite des Wulstkerns (110) gemessen.

4. Reifen nach einem der vorgenannten Ansprüche, wobei eine radial obere Spitze des Wulstkernprofils (48) sich auf einer radialen Höhe von 20 bis 35 mm, alternativ 25 bis 30 mm, befindet, radial aufwärts von einer Linie parallel zur radial unteren Seite des Wulstkerns (110) gemessen.

5. Reifen nach einem der vorgenannten Ansprüche, wobei die Härte (Shore A, 100°C) in einem Bereich von 76 bis 78 liegt.

6. Reifen nach einem der vorgenannten Ansprüche, wobei der mindestens eine halbmondförmige Kautschukeinsatz (42) sich von einer radialen Höhe von 20 bis 35 mm, alternativ 25 bis 30 mm, radial aufwärts von einer Linie parallel zur radial unteren Seite des Wulstkerns (110) gemessen, durch die Seitenwand (106) bis unter die Lauffläche (102) des Reifens (100) erstreckt.

7. Reifen nach einem der vorgenannten Ansprüche, wobei der mindestens eine halbmondförmige Kautschukeinsatz (42) sich axial einwärts unter der Lauffläche über einen seitlichen Abstand von 15 bis 30 mm erstreckt, gemessen ab einem jeweiligen seitlichen Laufflächenaußenrand parallel zur axialen Richtung des Reifens.

8. Reifen nach einem der vorgenannten Ansprüche, wobei die Kautschukmischung des mindestens einen halbmondförmigen Kautschukeinsatzes (42) einen tan delta im Bereich von 0,044 bis 0,047 und/oder einen 100% G-Modul in einem Bereich von 7,5 bis 7,8 MPa aufweist.

9. Reifen nach einem der vorgenannten Ansprüche, wobei der Reifen ein Hochleistungs-Personenwagenreifen ist.

10. Reifen nach einem der vorgenannten Ansprüche, wobei der Reifen kein Reifen mit Notlaufeigenschaften ist.

## Revendications

1. Bandage pneumatique comprenant une carcasse possédant au moins une nappe de carcasse (114), le cas échéant un calandrage intérieur (124), un flanc (106), un talon (108) comprenant une tringle de talon (110), un bourrage sur tringle (48) et une bande de roulement (102) disposée en direction radiale à l'extérieur de la carcasse, une pièce rapportée en caoutchouc en forme de croissant (42) disposée entre le calandrage intérieur (124) et ladite au moins une nappe de carcasse (114, 116), dans lequel le caoutchouc de ladite au moins une pièce rapportée en caoutchouc en forme de croissant possède une dureté Shore A (à 100 °C) dans la plage de 74 à 80, et dans lequel l'épaisseur maximale de ladite au moins une pièce rapportée en caoutchouc en forme de croissant (42), telle qu'on la mesure parallèlement à l'axe de rotation du bandage pneumatique, est inférieure à 30 % de l'épaisseur du flanc (106) du bandage pneumatique telle qu'on la mesure parallèlement à l'axe de rotation du bandage pneumatique à partir de la surface interne en direction axiale du flanc (106) jusqu'à la surface externe en direction axiale du flanc (106) à l'endroit correspondant à l'épaisseur maximale de ladite au moins une pièce rapportée en caoutchouc en forme de croissant (42), **caractérisé en ce que** l'épaisseur maximale de ladite au moins une pièce rapportée en caoutchouc en forme de croissance se situe dans la plage de 1,5 à 2,5 mm et **en ce que** le composé en caoutchouc de ladite au moins une pièce rapportée en caoutchouc en forme de croissant (42) possède une valeur tan delta dans la plage de 0,02 à 0,06 et un module G à 100 % dans la plage de 2 MPa à 10 MPa.

2. Bandage pneumatique selon la revendication 1, comprenant seulement une pièce rapportée en caoutchouc en forme de croissant (42).

3. Bandage pneumatique selon la revendication 1 ou 2, comprenant deux nappes de carcasse (114, 116) qui s'étendent toutes deux depuis un talon (108) du bandage pneumatique (100) jusqu'à l'autre talon du bandage pneumatique, et en ce que les deux viennent s'enrouler autour d'une tringle de talon respective (110) à partir du côté interne en direction axiale jusqu'au côté externe en direction axiale de ladite tringle de talon (110), dans lequel l'extrémité du retournement de nappe de carcasse interne en direction axiale (120) est située à une hauteur radiale de 10 à 30 mm, en variante de 15 à 25 mm, telle qu'on la mesure en direction radiale vers le haut à partir d'une ligne parallèle au côté inférieur en direction radiale de la tringle de salon (110), et dans lequel l'extrémité du retournement de nappe de carcasse externe en direction axiale (122) est située à une hauteur radiale de 35 à 65, en variante de 45 à 55 mm, telle qu'on la mesure en direction radiale vers le haut à partir d'une ligne parallèle au côté inférieur en direction radiale de la tringle de talon (110).

4. Bandage pneumatique selon l'une quelconque des revendications précédentes, dans lequel l'extrémité supérieure en direction radiale du bourrage sur tringle (48) est disposée à une hauteur radiale de 20 à 35 mm, en variante de 25 à 30 mm, telle qu'on la mesure en direction radiale vers le haut à partir d'une ligne parallèle au côté inférieur en direction radiale de la tringle de talon (110).

5. Bandage pneumatique selon l'une quelconque des revendications précédentes, dans lequel la dureté (Shore A, à 100 °C) se situe dans la plage de 76 à 78.

6. Bandage pneumatique selon l'une quelconque des revendications précédentes, dans lequel ladite au moins une pièce rapportée en caoutchouc en forme de croissant (42) s'étend depuis une hauteur radiale de 20 à 35 mm, en variante de 25 à 30 mm, telle qu'on la mesure en direction radiale vers le haut à partir d'une ligne parallèle au côté inférieur en direction radiale de la tringle de talon (110), en passant par le flanc (106) jusqu'à un endroit situé en dessous de la bande de roulement (102) du bandage pneumatique (100).

7. Bandage pneumatique selon l'une quelconque des revendications précédentes, dans lequel ladite au moins une pièce rapportée en caoutchouc en forme de croissant (42) s'étend en direction axiale vers l'intérieur en dessous de la bande de roulement sur une distance latérale de 15 à 30 mm, telle qu'on la mesure à partir d'un bord de bande de roulement externe latéral respectif parallèle à la direction axiale du bandage pneumatique.

8. Bandage pneumatique selon l'une quelconque des revendications précédentes, dans lequel le composé en caoutchouc de ladite au moins une pièce rapportée en caoutchouc en forme de croissant (42) possède une valeur tan delta dans la plage de 0,044 à 0,047 et/ou un module G à 100 % dans la plage de 7,5 à 7,8 MPa.

9. Bandage pneumatique selon l'une quelconque des revendications précédentes, dans lequel le bandage pneumatique est un bandage pneumatique haute performance pour un véhicule de tourisme.

10. Bandage pneumatique selon l'une quelconque des revendications précédentes, dans lequel le bandage pneumatique n'est pas un bandage pneumatique permettant de rouler à plat.
